# EUROPEAN PATENT SPECIFICATION

(11) **EP 2 892 711 B1**
(45) Date of publication and mention of the grant of the patent: **02.11.2022**
(21) Application number: 13767138.4
(22) Date of filing: 06.09.2013
(51) Int. Cl.: B29D 11/00, B29D 11/02

(54) **METHOD FOR MANUFACTURING AN INTRAOCULAR LENS OR A CONTACT LENS**
VERFAHREN ZUR HERSTELLUNG EINER INTRAOKULAREN LINSE ODER EINER KONTAKTLINSE
MÉTHODE DE FABRICATION D'UNE LENTILLE INTRAOCULAIRE OU D'UNE LENTILLE DE CONTACT

(30) Priority: 07.09.2012 NL 2009432
(43) Date of publication of application: 15.07.2015
(73) Proprietor: AMO Groningen B.V., 9728 NX Groningen (NL)
(72) Inventor: VAN DIJK, Emerentius Maria Josephus Antonius, NL-5657 EN Eindhoven (NL)
(74) Representative: V.O.
(86) International application number: PCT/NL2013/050643
(87) International publication number: WO 2014/038939

(56) References cited:
- EP-A1- 0 143 253
- EP-A1- 0 143 253
- DE-U1- 29 608 877
- DE-U1- 29 608 877
- GB-A- 2 040 213
- US-A- 4 247 492
- US-A- 4 584 148
- US-A- 4 647 261
- US-A- 5 071 101
- US-A- 5 071 101

## Description

### FIELD

The invention relates to a method for manufacturing an intraocular lens or a contact lens.

### BACKGROUND

In practice, high-quality contact lenses that are worn for a prolonged time, for example, three months, are not made with a cast mold process, unlike daily, weekly and monthly lenses. A method for manufacturing daily, weekly and monthly lenses is described in US-4,647,261. There, use is made of a cast mold process to form a contact lens whereby both accurately defined surfaces are formed during the cast mold process. Since in this known method for manufacturing a lens, flashes may have been formed on the circumferential edge of the lens, the circumferential edge of the lens still needs to undergo a finishing process referred to as trimming. Such trimming is a kind of turning operation that takes place while the lens, already optically finished, is still secured to one of the cast mold halves. After trimming, possibly a buffing operation is necessary.

US-4,247,492 discloses a method in which a bottom cup mold is formed from a resinous mold material which has been subject to high internal shear forces to alter the molecular structure of the resinous mold material to provide for greater bonding between the mold and lens material. The bottom cup is formed by placing the resinous mold material in a sleeve in which also a master mold is placed. Pressure and is applied to the mold material to form the lens mold. The mold thus formed by injection molding or compression molding includes a cup-like cavity. The cup-like cavity is subsequently filled with a monomer that is cured by applying microwave energy or heat. Subsequently, the convex curve of the lens may be cut and polished in a suitable lathe. Accordingly, a finished lens is produced having a molded concave optical surface and convex optical surface which was cut and polished without being removed from the disposable mold.

High-quality contact lenses, however, have hitherto, in practice, not been manufactured with cast molding. For such high-grade contact lenses, the starting material is a lens blank of which a first side is worked using a turning operation, and of which, thereafter, a second side is worked using a turning operation to obtain two optically accurately defined surfaces. It is precisely for these quality lenses that the turning operation is not simple. Often, it concerns aspherical, non-rotation symmetrical surfaces that are to be manufactured with the turning operation. The position of the lathe tool of the turning lathe should therefore, within a revolution of the chuck of the lathe, follow a defined reciprocating path often in the Z direction (perpendicular to the main rotation axis) of the lathe, so that eventually the aspherical, non-rotation symmetrical surface is formed. The resulting lens can for instance be toric, bifocal or have a like optical property.

For intraocular lenses, too, it holds that they have hitherto been manufactured in practice by starting from a lens blank in the form of a flat, circular disc which is then worked on both sides by a turning operation to form two optically accurately defined surfaces.

Such a method of manufacture is costly and time-consuming. Placing the lens blank in a lathe is to be carried out twice and, in view of the accuracy, requires much skill. Moreover, the time the turning operation takes per lens is rather high. That is why a production facility for such contact lenses often has a large number of lathes. In view of the high accuracy and the complicated control that such lathes should have, setting up such production facilities entails a huge investment. As, moreover, the processing duration per lens is also rather high, the cost price of such quality contact lenses and intraocular lenses is relatively high.

US 5,071,101 discloses a casting mold for use in the manufacture of intraocular and contact lenses. The known cast mold has a frusto-conical configuration and has features to facilitate location of the mold in a collet of a lens generating lathe for polishing or grinding a lens which has been cast in the mold.

EP-0 143 253 discloses a casting mold for optical lenses, such as ophthalmic intraocular lenses, corneal implants and contact lenses. The mold is charged with monomers and polymerization is initiated therein by a catalyst mixed in with the monomers. The mold is designed to provide for the formation of at least one of the optical surfaces of the lens. The other optical surface is generated and subsequently finished after polymerization is completed. The mold has means by which it is mounted on a precision mandrel such as a rod or bar for convenient handling and precision indexing during subsequent process operation. To that end, the known mold is equipped with internal thread capable of being mounted on a threaded precision mandrel such as a bar or rod.

### SUMMARY

The invention contemplates the provision of a new method for manufacturing intraocular lenses and contact lenses according to independent claim 1, without the above-described disadvantages.

Typically, these desired properties of the lens will be customer-specific and depend on the ocular defect of a specific patient. Precisely for manufacturing lenses for the benefit of patients with complex ocular defects where no use can be made of daily, weekly or monthly lenses, the method according to the invention is of particular advantage. Indeed, the specific corrections that are necessary for the specific ocular defects can be created with the turning operation on the second, opposite surface.

As regards contact lenses, the concave side thereof often has a standard base curve radius, mostly in the range of 8-10 mm, for example, 8.3 mm. The optically accurately defined surface of the optical cup part can for instance provide such a base curve radius. In the manufacture of contact lenses the optical cup part will be formed by the cup top part. The desired optical properties are provided to the contact lens by working the convex side of the lens during the turning operation.

As regards intraocular lenses, these have two opposite convex sides. For obtaining the desired optical properties of the intraocular lens it is sufficient for one of the sides to undergo a turning operation to form an aspherical, non-rotation symmetrical surface. The other convex side can have a simple standard contour, such as, for example, a spherical contour. Such a simple standard contour which does not require any further final processing can be eminently provided during a cast molding of the lens blank. For intraocular lenses, both the cup top part and the cup bottom part can serve as the optical cup part.

Thus, therefore, contact lenses and intraocular lenses having a particular aspherical, non-rotation symmetrical surface can be provided in half the normal turning operation time, since only one of the sides needs to be subjected to a turning operation. The machine park in the production facility can therefore, without any extra investment, generate twice as large an output when, instead of very simple prior art lens blanks produced by sawing from a rod of optical material and known in the art by the term "buttons", the semimanufacture obtained using the present method is purchased. It will be clear that this of particular interest from a commercial viewpoint. Moreover, from a technical viewpoint no concessions are made, because the lenses, owing to the presence of the turning operation, can still have any desired optical property. Thus, in this way customized lenses can be provided at considerably lower cost.

### BRIEF DESCRIPTION OF THE FIGURES

Fig. 1 shows an exemplary embodiment of a cast mold in perspective exploded view;
Fig. 2 shows a perspective view of the exemplary embodiment of Fig. 1;
Fig. 3 shows a cross sectional view of a cup top part with lens blank;
Figs. 4-13 show an example of successive production stages for manufacturing a lens.

### DETAILED DESCRIPTION

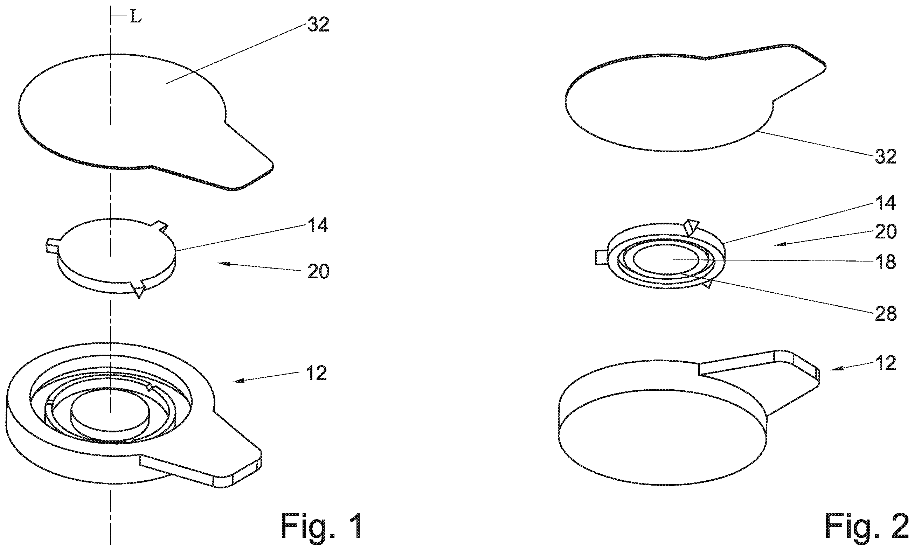

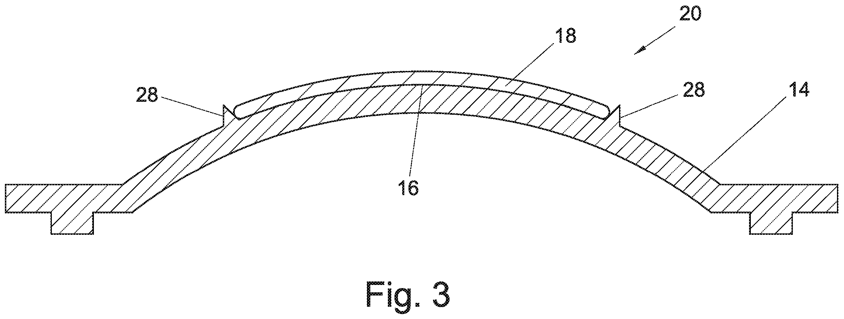

Figs. 1 and 2 show in perspective a cup bottom part 12 and a cup top part. The topmost part 32 is an optional foil 32 which upon completion of the method that will be described below can be fastened wholly onto the cup bottom part 12 when a finished lens 10 has been placed in the latter, such that a packaged lens is obtained. This packaging possibility, however, is only an option and does not constitute the core of the invention. In Fig. 2 it can be seen that the cup top part carries a lens blank 18. The lens blank 18 in Fig. 2 has just been formed by cast molding and is yet to undergo a follow-on operation, viz., a turning operation, to form a second optically accurately defined surface. Also, it is visible in Fig. 2 that the lens blank 18 is bounded by an upstanding edge 28. This upstanding edge 28 is part of an embodiment. The cup top part with the lens blank 18 situated thereon is shown in cross section in Fig. 3. There, the optional upstanding edge 28 is also clearly visible.

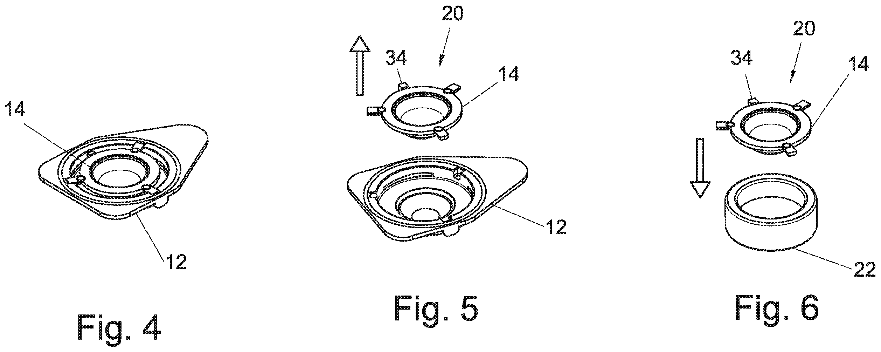

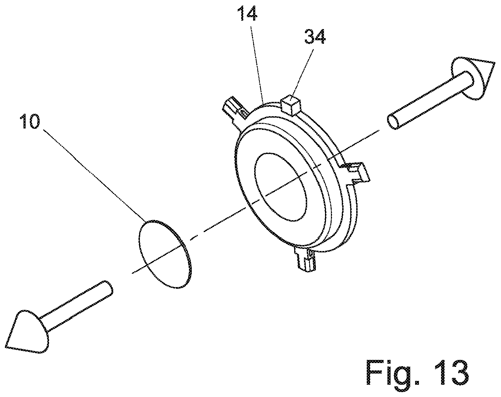

The method will be further elucidated below with reference to Figs. 4-13, in which an exemplary embodiment is shown.

In the most general terms, a method is provided for manufacturing an intraocular lens or a contact lens 10. The method comprises the following steps:
- manufacturing a cup bottom part 12 by injection molding;
- manufacturing a cup top part by injection molding, at least one of the two cup parts 12,14 being an optical cup part which is provided with an optically accurately defined surface 16;
- injecting monomer into the cup bottom part 12 and placing the cup top part on the cup bottom part 12 to form a cast mold 12,14 filled with monomeric material;
- curing the monomer in the cast mold 12,14 to form a lens blank 18.

When these steps have been traversed, one has available a cast mold 12,14 having therein a lens blank 18, of which an example is shown in Fig. 4. A next step of the method comprises:
- separating the cup top part and the cup bottom part 12 for exposing the formed lens blank 18, which is bonded to the optical cup part during curing, to provide a semimanufacture assembly 20, to be worked with a turning lathe, which comprises the optical cup part and the lens blank 18, the lens blank 18 comprising an optically accurately defined surface which is bonded to the optical cup part and an opposite surface which is to undergo a finishing process in a turning lathe to form an optically accurately defined surface.

In the method of cast molding known hitherto, finished contact lenses are manufactured which are not bonded to one of the two mold halves 12. Owing to the lens blank 18 according to the invention being bonded to the optical cup part, it can be simply handled and undergo a follow-on operation, such as, for example, a turning operation. The figures show an example of the method in which the semimanufacture 20 serves as a starting point for the manufacture of a contact lens 10. The optical cup part in that case is formed by the cup top part. The side to be worked by a turning operation in a later stage is the convex side of the lens blank 18. The concave side is bonded to the cup top part which forms the optical cup part.

In an alternative example of the method, which is not represented in the figures, a semimanufacture assembly that is formed can serve as a starting point for the manufacture of an intraocular lens. In general, such an intraocular lens has two convex sides. The optical cup part to which the lens blank is bonded can in that case be formed by the cup top part but also by the cup bottom part.

In an embodiment, the method can comprise subjecting the optically accurately defined surface 16 of the optical cup part to a plasma treatment, this plasma treatment taking place before placing the optical cup part on the other cup part 12. This plasma treatment should be such as to provide a surface structure which promotes bonding between the lens blank 18 and the optical cup part. In itself, subjecting a cup part to a plasma treatment is known from US-4,584,148. There, however, the plasma treatment serves to improve the hydrophilicity or wettability of the mold cavity. The use of a plasma treatment to form a surface structure that promotes bonding between the lens blank and the optical cup part is not known from that publication.

In an embodiment, the method may be further characterized in that the plasma treatment is a corona plasma treatment.

In a further elaboration of the method, the surface structure can comprise a particular surface roughness of such a fineness that it does not visibly influence the optical properties of the lens blank 18 which is manufactured with the method.

The lens blank 18 then does not need to undergo any further processing on the side that is formed in contact with the optical surface 16 of the optical cup part.

In an embodiment the surface structures that form the surface roughness can be smaller than the wavelength of the visible light. When such surface structures are copied into the lens blank 18 during cast molding, a lens blank 18 is obtained in which incidental light is not influenced by those copied surface structures in a visible manner.

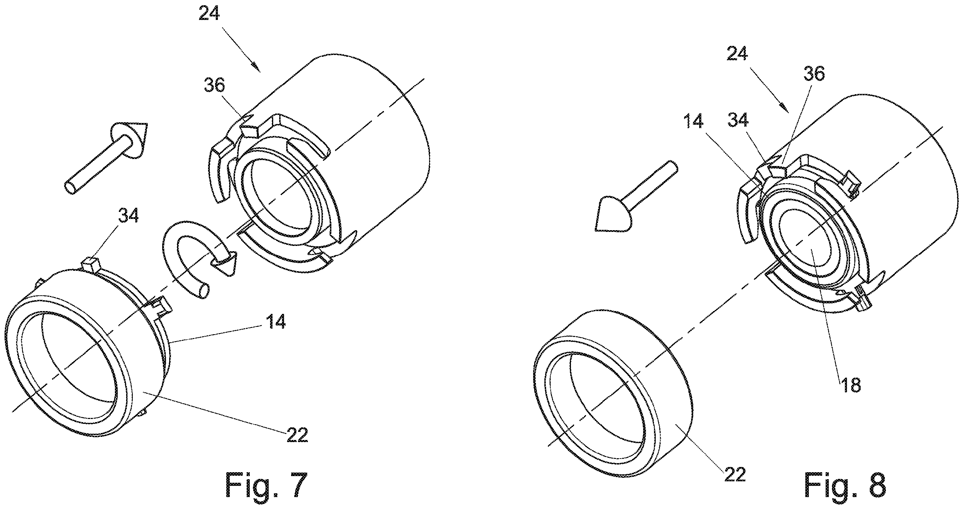

In an exemplary embodiment, of which an example is shown in Figs. 4-13, a protective cap 22 may be placed on the assembly of the lens blank 18 and the optical cup part to form the semimanufacture assembly 20 which comprises at least the optical cup part, a lens blank 18 and the protective cap 22. This action is shown in Fig. 6 and the assembly thereby obtained is shown in Fig. 7.

The semimanufacture assembly 20 - with or without protective cap 22 - is a product marketable in itself, which can be supplied to lens manufacturers. Such semimanufacture assemblies 20 could be supplied, for instance, by the same firms that presently supply optical material in the form of flat cylindrical lens blanks to lens manufacturers. Thus, in a simple manner they enable the lens manufacturers that have a series of lathes at their disposal to nearly double their manufacturing output without their needing to expand the number of lathes.

The optional protective cap 22 facilitates handling of the optical cup part and the lens blank 18 bonded thereto. Moreover, when use is made of such a protective cap 22, there is less chance of damage of the lens blank 18, and the lens 10 to be formed therefrom, during transport of the assembly. Such transport can take place, for instance, from the semimanufacture supplier to the lens manufacturer.

In an alternative further elaboration, the manufacturer of the semimanufacture assembly 20, instead of fitting a protective cap 22 onto it, can package it in a package, for example, a blister package. From a cost perspective, that is cheaper than co-supplying a protective cap 22. Moreover, such a blister package provides the advantage that the lens blank 18 is well protected from moisture and oxygen and other external influences. At the lens manufacturer's, the semimanufacture assembly 20 can then be taken out of the package and and according to the present invention, is mounted on a handling cap 24 with a bayonet connection which engages the positioning means of the cup part. Such positioning means comprise a number of radially extending legs which are connected to a circumferential edge of the cup part. In the figures, the cup part is provided with three of such radially extending legs. The handling cap 24 is situated on the side of the cup part remote from the lens blank 18. This handling cap 24 is placed in a chuck of a lathe or is an integral part thereof. In the exemplary embodiment represented in the figures, the handling cap 24 is an integral part of the chuck of the lathe. However, when the handling cap 24 is not an integral part of the chuck of the lathe but is to be received in it, then the handling cap 24 and the chuck are each provided with reference surfaces that adjoin each other, so that the rotational position of the handling cap 24 in the chuck is accurately defined. This can be of importance when the optically accurately defined surface formed during curing is not spherical but aspherical, such as, for example, toric, cylindrical or bifocal. The handling cap 24, or the chuck when the handling cap 24 is an integral part of the chuck, is provided with a reference stop 36. The optical cup part is provided with a reference lug 34. Upon placement of the cup part in the handling cap 24, which is an integral part of the chuck in the figures, the reference lug 34 is moved against the reference stop 36, so that the rotational position of the cup part relative to the chuck is accurately determined. In that manner, the rotational position of the lens blank 18 in the lathe is accurately determined. The optically accurately defined surface yet to be formed in the lathe can then be accurately oriented, also in a rotational sense, relative to the optically accurately defined surface already formed upon curing, which can be, for example, aspherical. Upon completion of the turning operation, the finished lens 10 can be removed from the cup part and be accommodated in a definitive package, whether or not in a moist environment.

As has already become clear from the foregoing, a subsequent step that is to be performed is to make from the lens blank 18 with a turning operation a full lens 10 with two optically accurately defined surfaces. Because during the turning operation the bond between the lens blank 18 and the optical cup part is subject to shear, it is favorable, in a further elaboration of the invention, when the optical cup part is provided with an upstanding edge 28 which forms a boundary for the monomeric material, so that, after curing of the monomeric material, the boundary determines a circumferential edge 11 of the lens blank 18. Such an edge provides an enlarged bonding surface between the lens blank 18 and the optical cup part. This leads to a better bonding between the two parts.

A still better shear resistance of the lens blank 18 of the optical cup part can be obtained, according to a further elaboration, when the upstanding edge 28, seen in top plan view, has a contour deviating from a circle, for instance, an elliptical contour. In that case, there is not only a force-closed connection but also a form-closed connection between the lens blank 18 and the optical cup part, since rotation of the elliptical lens blank 18 within the elliptical upstanding edge 28 is not possible. Such an effect can also be achieved with a circular edge 28 having a flattened portion or with an upstanding edge 28 polygonal in top plan view.

The subsequent steps of the method for manufacturing a contact lens or an intraocular lens 10 will be described with reference to an example that is shown in Figs. 7-13. The subsequent steps of the method comprise:
- placing the semimanufacture assembly 20 in the chuck of a lathe, the lens blank 18 being situated on the side of the optical cup part remote from the chuck, so as to be accessible to a lathe tool 26 of the lathe for forming the second optically accurately defined surface.

This step is shown in Fig. 7. The exemplary embodiment shown relates to a semimanufacture assembly which is provided with a protective cap 22. As already indicated before, the protective cap 22 is only optional and the invention is not limited to such an embodiment. Next, the method comprises the following step:
- subjecting the lens blank 18 to a turning operation with the lathe tool 26 to form a lens 10 having on both sides an optically accurately defined surface, wherein one optically accurately defined surface is formed during curing of the monomer in the cast mold 12,14 and wherein the second optically accurately defined surface is formed during the turning operation.

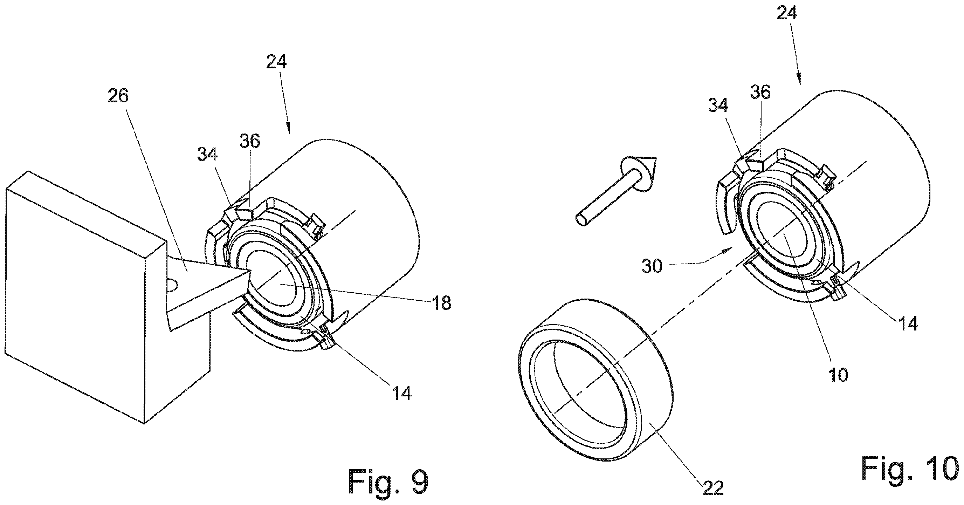

This step is represented in Fig. 9. Thus, therefore, an assembly 30 is obtained which comprises a finished lens 10 which is still bonded to the optical cup part.

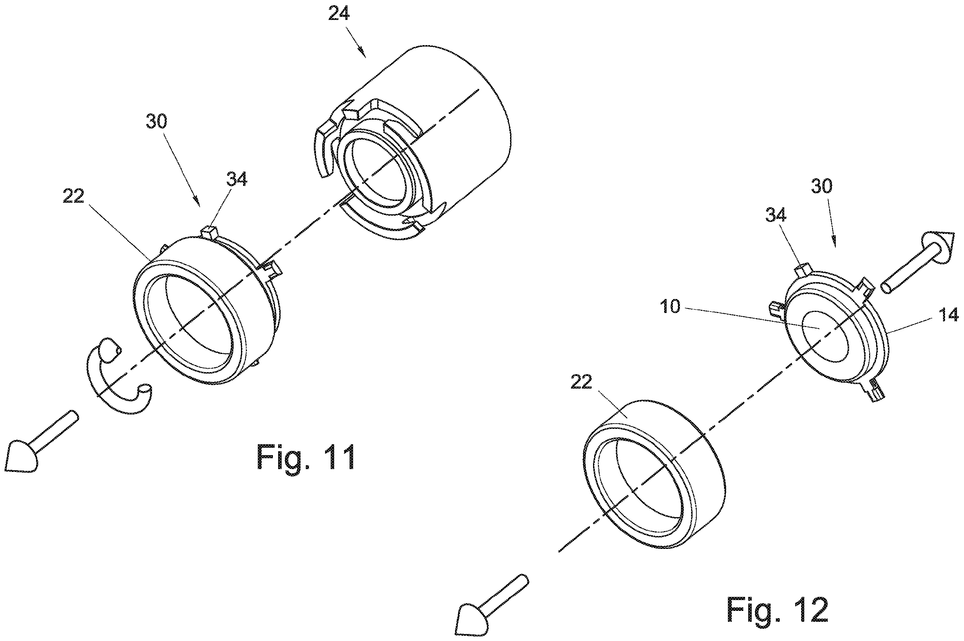

In an embodiment of the method, thereupon, after the turning operation, the assembly 30 of the optical cup part and the lens 10 can be removed from the chuck of the lathe. This step is shown in Fig. 11.

After this, according to a further elaboration of the invention, the lens 10 can be separated from the optical cup part so as to obtain a loose lens 10. Such a separation can be simply realized by hydrating the lens 10 in a manner known per se with demineralized water or with a saline solution. The lens 10 then swells, becomes supple and comes off the optical cup part.

It is practical for the separation of the lens 10 from the optical cup part to be carried out after the assembly 30 of the optical cup part and the lens 10 has been removed from the chuck of the lathe.

As already described above, use of the protective cap 22 as shown in Figs. 3-13 is an option and not a necessity. The protective cap 22 simplifies the handling of the optical cup part and, bonded thereto, the lens blank 18 and in a later stage lens 10, and reduces the risk of damage of the lens blank 18 and the lens 10.

When use is made of such a protective cap 22, then, according to a further elaboration of the invention, mounting the semimanufacture assembly 20 in the chuck takes place while the protective cap 22 is still on the lens blank 18 and the optical cup part. Next, the method comprises removing the protective cap 22 after the semimanufacture assembly 20 has been placed in the chuck and prior to the turning operation to form the lens 10. When the turning operation has been completed, the protective cap 22 can be re-placed to provide for easy handling and to minimize the risk of damage of the lens 10. After this, the assembly 30 of the optical cup part, the lens 10 and the protective cap 22 can be simply taken from the chuck.

In further method steps the protective cap 22 can be removed from the optical cup part and the lens 10. This will generally be done at a different place in the factory. The assembly 30 must therefore be transported and then the presence of the protective cap 22 is of benefit.

Next, the lens 10 and the optical cup part can be separated in the manner described above so as to obtain a loose lens 10.

In a further elaboration, the loose lens 10 can be packaged with addition of fluid, for instance in the cup bottom part 12, the cup bottom part 12 then being sealed with a foil 32. The cup bottom part 12 with the foil 32 then forms a liquid-tight package for the lens 10 and can be offered so to the end consumer.

## Claims

1. A method for manufacturing an intraocular lens or a contact lens (10), comprising:
• manufacturing a cup bottom part (12) by injection molding;
• manufacturing a cup top part (14) by injection molding,
wherein at least one of the two cup parts (12,14) is an optical cup part which is provided with an optically accurately defined surface (16) and with a positioning means comprising a number of radially extending legs which are connected to a circumferential edge of the optical cup part;
• injecting monomer into the cup bottom part (12) and placing the cup top part (14) on the cup bottom part (12) to form a cast mold (12,14) filled with monomeric material;
• curing the monomer in the cast mold (12,14) to form a lens blank (18); and
• separating the cup top part (14) and the cup bottom part (12) for exposing the formed lens blank (18), which is bonded to the optical cup part during curing, to provide a semimanufacture assembly (20), to be worked with a turning lathe, which comprises the optical cup part and the lens blank (18), the lens blank (18) comprising an optically accurately defined surface which is bonded to the optical cup part and an opposite surface which is to undergo a finishing process in a turning lathe to form an optically accurately defined surface;
• placing the semimanufacture assembly (20) in the chuck of a turning lathe, the lens blank (18) being situated on the side of the optical cup part remote from the chuck so as to be accessible to a lathe tool (26) of the lathe for forming the second optically accurately defined surface, wherein the placing includes:
o providing a handling cap (24) with a bayonet connection configured for engaging the positioning means of the optical cup part wherein:
▪ the handling cap (24) is an integral part of a chuck of the lathe; or wherein
▪ the handling cap (24) is a separate part that is received in the chuck of the lathe, wherein the handling cap (24) and the chuck are each provided with reference surfaces that adjoin each other when the handling cap (24) is received in the chuck, so that the rotational position of the handling cap (24) in the chuck is accurately defined;
o positioning the optical cup part in the handling cap (24) by means of engagement between the positioning means of the optical cup part and the bayonet connection of the handling cap (24), wherein the handling cap (24) is situated on the side of the optical cup part remote from the lens blank (18), wherein the handling cap (24) includes a reference stop (36) and the optical cup part includes a reference lug (34), wherein during positioning of the optical cup part in the handling cap (24), the reference lug (34) is moved against the reference stop (36), so that the rotational position of the cup part relative to the chuck is accurately determined;
• subjecting the lens blank (18) to a turning operation with the lathe tool (26) to form a lens (10) having on both sides an optically accurately defined surface, wherein one optically accurately defined surface is formed during curing of the monomer in the cast mold (12,14) and wherein the second optically accurately defined surface is formed during the turning operation.

2. The method according to claim 1, comprising:
• subjecting the optically accurately defined surface (16) of the optical cup part to a plasma treatment before placement thereof on the other cup part (12) to form a surface structure which promotes bonding between the lens blank (18) and the optical cup part.

3. The method according to claim 2, wherein the plasma treatment is a corona plasma treatment.

4. The method according to claim 2 or 3, wherein the surface structure comprises a particular surface roughness of such fineness that it does not visibly influence the optical properties of the lens blank (18) which is manufactured with the method.

5. The method according to claim 4, wherein the surface structures that form the surface roughness are smaller than the wavelength of the visible light.

6. The method according to any one of the preceding claims, comprising:
• placing a protective cap (22) on the assembly of the lens blank (18) and the optical cup part to form the semimanufacture assembly (20) which comprises at least the optical cup part, a lens blank (18) and the protective cap (22).

7. The method according to any one of the preceding claims, wherein the optical cup part is provided with an upstanding edge (28) which forms a boundary for the monomeric material, so that, after curing of the monomeric material, the boundary defines a circumferential edge (11) of the lens blank (18).

8. The method according to claim 7, wherein the upstanding edge (28), seen in top plan view, has a contour deviating from a circle, for example, an elliptical contour.

9. The method according to any one of claims 1-8, comprising:
• after the turning operation, removing the assembly (30) of the optical cup part and the lens (10) from the chuck of the lathe.

10. The method according to any one of claims 1-9, comprising:
• separating the lens (10) from the optical cup part to obtain a loose lens (10).

11. The method according to claim 10, wherein separating the lens (10) from the optical cup part is carried out after the assembly (30) of the optical cup part and the lens (10) is removed from the chuck of the lathe.

12. The method according to any one of claims 1-11, wherein the carrying out of the method for providing the semimanufacture assembly (20) is a method according to claim 8 so that the semimanufacture assembly (20) comprises an optical cup part, a lens blank (18) and a protective cap (22), wherein placing the semimanufacture assembly (20) in the chuck takes place while the protective cap (22) is still on the lens blank (18) and the optical cup part, the method further comprising:
• removing the protective cap (22) after the semimanufacture assembly (20) is placed in the chuck and prior to the turning operation to form the lens (10);
• re-placing the protective cap (22) after the turning operation on the lens blank (18) to form the lens (10);
• taking the assembly (30) of the optical cup part, the lens (10) and the protective cap (22) out of the chuck.

13. The method according to claim 12, comprising:
• removing the protective cap (22) from the optical cup part and the lens (10).

14. The method according to claim 10, wherein the loose lens (10) is packaged with addition of fluid, for instance in the cup bottom part (12), wherein the cup bottom part (12) is sealed with a foil (32).

## Patentansprüche

1. Verfahren zur Herstellung einer intraokularen Linse oder einer Kontaktlinse (10), das umfasst:
• Herstellung eines Schalenunterteils (12) durch Spritzgießen;
• Herstellung eines Schalenoberteils (14) durch Spritzgießen, wobei wenigstens eines der beiden Schalenteile (12,14) ein optisches Schalenteil ist, das mit einer optisch genau definierten Oberfläche (16) und mit einem Positionierungsmittel versehen ist, das eine Anzahl von sich radial erstreckenden Beinen umfasst, die mit einem Umfangskante des optischen Schalenteils verbunden sind;
• Einspritzen von Monomer in das Schalenunterteil (12) und Aufsetzen des Schalenoberteils (14) auf das Schalenunterteil (12), um eine mit Monomermaterial gefüllte Gussform (12, 14) zu bilden;
• Aushärten des Monomers in der Gussform (12, 14), um einen Linsenrohling (18) zu bilden; und
• Trennen des Schalenoberteils (14) und des Schalenunterteils (12), um den geformten Linsenrohling (18) freizulegen, der während des Aushärtens mit dem optischen Schalenteil verbunden ist, um eine mit einer Drehmaschine zu bearbeitende Halbfertigbaugruppe (20) bereitzustellen, die das optische Schalenteil und den Linsenrohling (18) umfasst, wobei der Linsenrohling (18) eine optisch genau definierte Oberfläche, die mit dem optischen Schalenteil verbunden ist, und eine gegenüberliegende Oberfläche umfasst, die einem Endbearbeitungsprozess in einer Drehmaschine unterzogen werden soll, um eine optisch genau definierte Oberfläche zu bilden;
• Einsetzen der Halbfertigbaugruppe (20) in das Spannfutter einer Drehmaschine, wobei der Linsenrohling (18) auf der von dem Spannfutter entfernten Seite des optischen Schalenteils angeordnet ist, so dass er für einen Drehwerkzeug(26) der Drehmaschine zur Bildung der zweiten optisch genau definierten Oberfläche zugänglich ist, wobei das Einsetzen einschließt:
o Bereitstellen einer Handhabungskappe (24) mit einer Bajonettverbindung, die so eingerichtet ist, dass sie in die Positionierungsmittel des optischen Schalenteils eingreift, wobei:
▪ die Handhabungskappe (24) ein Bestandteil eines Spannfutters der Drehmaschine ist; oder wobei
▪ die Handhabungskappe (24) ein separates Teil ist, das in dem Spannfutter der Drehmaschine aufgenommen wird, wobei die Handhabungskappe (24) und das Spannfutter jeweils mit Bezugsflächen versehen sind, die aneinander angrenzen, wenn die Handhabungskappe (24) in dem Spannfutter aufgenommen ist, so dass die Drehposition der Handhabungskappe (24) in dem Spannfutter genau definiert ist;
o Positionieren des optischen Schalenteils in der Handhabungskappe (24) durch Eingriff zwischen dem Positionierungsmittel des optischen Schalenteils und der Bajonettverbindung der Handhabungskappe (24), wobei die Handhabungskappe (24) auf der von dem Linsenrohling (18) entfernten Seite des optischen Schalenteils angeordnet ist, wobei die Handhabungskappe (24) einen Referenzanschlag (36) und der optische Schalenteil einen Referenzvorsprung (34) aufweist, wobei während des Positionierens des optischen Schalenteils in der Handhabungskappe (24) der Referenzvorsprung (34) gegen den Referenzanschlag (36) bewegt wird, so dass die Drehposition des Schalenteils relativ zu dem Spannfutter genau bestimmt wird;
• Unterziehen des Linsenrohlings (18) einem Drehvorgang mit dem Drehwerkzeug(26), um eine Linse (10) zu bilden, die auf beiden Seiten eine optisch genau definierte Oberfläche aufweist, wobei eine optisch genau definierte Oberfläche während des Aushärtens des Monomers in der Gussform (12,14) gebildet wird und wobei die zweite optisch genau definierte Oberfläche während des Drehvorgangs gebildet wird.

2. Verfahren nach Anspruch 1, das umfasst:
• Unterziehen der optisch genau definierten Oberfläche (16) des optischen Schalenteils einer Plasmabehandlung, bevor sie auf den anderen Schalenteil (12) gesetzt wird, um eine Oberflächenstruktur zu bilden, die das Verbinden zwischen dem Linsenrohling (18) und dem optischen Schalenteil begünstigt.

3. Verfahren nach Anspruch 2, wobei die Plasmabehandlung eine Corona-Plasmabehandlung ist.

4. Verfahren nach Anspruch 2 oder 3, wobei die Oberflächenstruktur eine besondere Oberflächenrauhigkeit von solcher Feinheit umfasst, dass sie die optischen Eigenschaften des mit dem Verfahren hergestellten Linsenrohlings (18) nicht sichtbar beeinflusst.

5. Verfahren nach Anspruch 4, wobei die Oberflächenstrukturen, die die Oberflächenrauigkeit bilden, kleiner sind als die Wellenlänge des sichtbaren Lichts.

6. Verfahren nach einem der vorhergehenden Ansprüche, das umfasst:
• Aufsetzen einer Schutzkappe (22) auf der Baugruppe aus dem Linsenrohling (18) und dem optischen Schalenteil, um die Halbfertigbaugruppe (20) zu bilden, die wenigstens den optischen Schalenteil, einen Linsenrohling (18) und die Schutzkappe (22) umfasst.

7. Verfahren nach einem der vorhergehenden Ansprüche, wobei der optische Schalenteil mit einer aufrechten Kante (28) versehen ist, die eine Begrenzung für das Monomermaterial bildet, so dass nach dem Aushärten des Monomermaterials die Begrenzung eine Umfangskante (11) des Linsenrohlings (18) definiert.

8. Verfahren nach Anspruch 7, **dadurch gekennzeichnet, dass** die aufrechte Kante (28) in der Draufsicht eine von einem Kreis abweichende Kontur, z. B. eine elliptische Kontur, aufweist.

9. Verfahren nach einem der Ansprüche 1 bis 8, das umfasst:
• Entfernen nach dem Drehvorgang der Baugruppe (30) aus optischem Schalenteil und der Linse (10) aus dem Spannfutter der Drehmaschine.

10. Verfahren nach einem der Ansprüche 1 bis 9, das umfasst:
• Trennen der Linse (10) von dem optischen Schalenteil, um eine lose Linse (10) zu erhalten.

11. Verfahren nach Anspruch 10, wobei das Trennen der Linse (10) von dem optischen Schalenteil durchgeführt wird, nachdem die Baugruppe (30) aus dem optischen Schalenteil und die Linse (10) aus dem Spannfutter der Drehmaschine entfernt wurde.

12. Verfahren nach einem der Ansprüche 1 bis 11, wobei die Durchführung des Verfahrens zum Bereitstellen der Halbfertigbaugruppe (20) ein Verfahren nach Anspruch 8 ist, so dass die Halbfertigbaugruppe (20) ein optisches Schalenteil, einen Linsenrohling (18) und eine Schutzkappe (22) umfasst, wobei das Einsetzen der Halbfertigbaugruppe (20) in das Spannfutter erfolgt, während sich die Schutzkappe (22) noch auf dem Linsenrohling (18) und dem optischen Schalenteil befindet, wobei das Verfahren ferner umfasst:
• Entfernen der Schutzkappe (22) nach dem Einsetzen der Halbfertigbaugruppe (20) in das Spannfutter und vor dem Drehvorgang, um die Linse (10) zu bilden;
• Wiederaufsetzen der Schutzkappe (22) nach dem Drehvorgang auf den Linsenrohling (18), um die Linse (10) zu bilden;
• Entfernen der Baugruppe (30) aus dem optischen Schalenteil, der Linse (10) und der Schutzkappe (22) aus dem Spannfutter.

13. Verfahren nach Anspruch 12, das umfasst:
• Entfernen der Schutzkappe (22) aus dem den optischen Schalenteil und der Linse (10).

14. Verfahren nach Anspruch 10, wobei die lose Linse (10) unter Zugabe von Flüssigkeit verpackt wird, zum Beispiel im Schalenunterteil (12), wobei der Schalenunterteil (12) mit einer Folie (32) versiegelt wird.

## Revendications

1. Procédé de fabrication d'une lentille intraoculaire ou d'une lentille de contact (10), comprenant :
- la fabrication d'une partie de fond de coupelle (12) par moulage par injection ;
- la fabrication d'une partie supérieure de coupelle (14) par moulage par injection,
dans lequel au moins l'une des deux parties de coupelle (12, 14) est une partie de coupelle optique qui est munie d'une surface définie de manière optiquement précise (16) et d'un moyen de positionnement comprenant un certain nombre de pattes s'étendant radialement qui sont reliées à un bord circonférentiel de la partie de coupelle optique ;
- l'injection d'un monomère dans la partie inférieure de la coupelle (12) et le placement de la partie supérieure de la coupelle (14) sur la partie inférieure de la coupelle (12) pour former un moule coulé (12, 14) rempli de matériau monomère ;
- le durcissement du monomère dans le moule (12, 14) pour former une ébauche de lentille (18) ; et
- la séparation de la partie supérieure de la coupelle (14) et de la partie inférieure de la coupelle (12) pour exposer l'ébauche de lentille formée (18), qui est liée à la partie de la coupelle optique pendant le durcissement, pour fournir un ensemble semi-fini (20), à travailler avec un tour, qui comprend la partie de la coupelle optique et l'ébauche de lentille (18), l'ébauche de lentille (18) comprenant une surface définie avec précision d'un point de vue optique qui est liée à la partie de la coupelle optique et une surface opposée qui doit subir un processus de finition dans un tour pour former une surface définie avec précision d'un point de vue optique ;
- le placement de l'ensemble semi-fini (20) dans le mandrin d'un tour, l'ébauche de lentille (18) étant située sur le côté de la partie de coupelle optique éloignée du mandrin de manière à être accessible à un outil (26) du tour pour former la seconde surface définie avec précision d'un point de vue optique, dans lequel le placement inclut :
o la fourniture d'un capuchon de manipulation (24) avec une connexion à baïonnette configurée pour se mettre en prise dans le moyen de positionnement de la partie de coupelle optique dans lequel :
▪ le capuchon de manutention (24) fait partie intégrante d'un mandrin du tour ; ou dans lequel
▪ le capuchon de manipulation (24) est une pièce séparée qui est reçue dans le mandrin du tour, dans lequel le capuchon de manipulation (24) et le mandrin sont chacun pourvus de surfaces de référence qui se rejoignent lorsque le capuchon de manipulation (24) est reçu dans le mandrin, de sorte que la position de rotation du capuchon de manipulation (24) dans le mandrin est définie avec précision ;
o le positionnement de la partie de coupelle optique dans le capuchon de manipulation (24) au moyen d'une mise en prise entre le moyen de positionnement de la partie de coupelle optique et la connexion à baïonnette du capuchon de manipulation (24), dans lequel le capuchon de manipulation (24) est situé sur le côté de la partie de coupelle optique éloigné de l'ébauche de lentille (18), dans lequel le capuchon de manipulation (24) inclut une butée de référence (36) et la partie de coupelle optique inclut une patte de référence (34), dans lequel pendant le positionnement de la partie de coupelle optique dans le capuchon de manipulation (24), la patte de référence (34) est déplacée contre la butée de référence (36), de sorte que la position de rotation de la partie de coupelle par rapport au mandrin est déterminée avec précision ;
- la soumission de l'ébauche de lentille (18) à une opération de tournage avec l'outil de tour (26) pour former une lentille (10) présentant sur les deux côtés une surface définie avec précision d'un point de vue optique, dans lequel une surface définie avec précision d'un point de vue optique est formée pendant le durcissement du monomère dans le moule coulé (12, 14) et dans lequel la seconde surface définie avec précision d'un point de vue optique est formée pendant l'opération de tournage.

2. Procédé selon la revendication 1, comprenant :
- la soumission de la surface optiquement définie avec précision (16) de la partie de coupelle optique à un traitement au plasma avant son placement sur l'autre partie de coupelle (12) pour former une structure de surface qui favorise la liaison entre l'ébauche de lentille (18) et la partie de coupelle optique.

3. Procédé selon la revendication 2, dans lequel le traitement au plasma comprend un traitement au plasma corona.

4. Procédé selon la revendication 2 ou 3, dans lequel la structure de surface comprend une rugosité de surface particulière d'une finesse telle qu'elle n'influence pas visiblement les propriétés optiques de l'ébauche de lentille (18) qui est fabriquée avec le procédé.

5. Procédé selon la revendication 4, dans lequel les structures de surface qui forment la rugosité de surface sont plus petites que la longueur d'onde de la lumière visible.

6. Procédé selon l'une quelconque des revendications précédentes, comprenant :
- le placement d'un capuchon de protection (22) sur l'ensemble de l'ébauche de lentille (18) et de la partie de coupelle optique pour former l'ensemble semi-fini (20) qui comprend au moins la partie de coupelle optique, une ébauche de lentille (18) et le capuchon de protection (22).

7. Procédé selon l'une quelconque des revendications précédentes, dans lequel la partie de coupelle optique est pourvue d'un bord vertical (28) qui forme une limite pour le matériau monomère, de sorte que, après durcissement du matériau monomère, la limite définit un bord circonférentiel (11) de l'ébauche de lentille (18).

8. Procédé selon la revendication 7, dans lequel le bord vertical (28), vu dans une vue en plan de dessus, présente un contour s'écartant d'un cercle, par exemple, un contour elliptique.

9. Procédé selon l'une quelconque des revendications 1 à -8, comprenant :
- après l'opération de tournage, le retrait de l'ensemble (30) constitué par la pièce de la coupelle optique et la lentille (10) du mandrin du tour.

10. Procédé selon l'une quelconque des revendications 1 à 9, comprenant :
- la séparation de la lentille (10) de la partie coupelle optique pour obtenir une lentille (10) détachée.

11. Procédé selon la revendication 10, dans lequel la séparation de la lentille (10) de la partie de coupelle optique est effectuée après que l'assemblage (30) de la partie de coupelle optique et de la lentille (10) a été retiré du mandrin du tour.

12. Procédé selon l'une quelconque des revendications 1 à 11, dans lequel la mise en œuvre du procédé pour fournir l'ensemble semi-fini (20) est un procédé selon la revendication 8 de sorte que l'ensemble semi-fini (20) comprend une partie de coupelle optique, une ébauche de lentille (18) et un capuchon de protection (22), dans lequel le placement de l'ensemble semi-fini (20) dans le mandrin a lieu alors que le capuchon de protection (22) est toujours sur l'ébauche de lentille (18) et la partie de coupelle optique, le procédé comprenant en outre :
- le retrait du capuchon de protection (22) après que l'ensemble semi-fini (20) a été placé dans le mandrin et avant l'opération de tournage pour former la lentille (10) ;
- la remise en place du capuchon de protection (22) après l'opération de tournage de l'ébauche de lentille (18) pour former la lentille (10) ;
- la sortie du mandrin de l'ensemble (30) composé de la pièce de la coupelle optique, de la lentille (10) et du capuchon de protection (22).

13. Procédé selon la revendication 12, comprenant :
- le retrait du capuchon de protection (22) de la partie de coupelle optique et de la lentille (10).

14. Procédé selon la revendication 10, dans lequel la lentille détachée (10) est emballée avec un ajout de fluide, par exemple dans la partie inférieure de la coupelle (12), dans lequel la partie inférieure de la coupelle (12) est scellée avec une feuille (32).
